# EUROPÄISCHE PATENTANMELDUNG

(11) **EP 2 028 052 A1**
(43) Veröffentlichungstag der Anmeldung: **25.02.2009**
(21) Anmeldenummer: 08013321.8
(22) Anmeldetag: 24.07.2008
(51) Int. Cl.: B60R 5/04, F16C 29/00

(54) **Ladegutsicherungsvorrichtung für einen Laderaum eines Kraftfahrzeugs**

(30) Priorität: 20.08.2007 DE 102007040373
(71) Anmelder: BOS GmbH & Co. KG, 73760 Ostfildern (DE)
(72) Erfinder: Bohlke, Hartmut, 42369 Wuppertal (DE); Göbbels, Andreas, 51515 Kürten (DE); Salewski, Jürgen, 40599 Düsseldorf (DE); Sitzler, Wolfgang, 42111 Wuppertal (DE)
(74) Vertreter: Wilhelm, Peter

(57) **Zusammenfassung**

Ladegutsicherungsvorrichtung mit wenigstens zwei zumindest nahezu parallel zueinander verlaufenden Lastschienen, die an einer gemeinsamen Laderaumbegrenzungsfläche, insbesondere einem Laderaumboden, angeordnet sind, sowie mit einer sich quer zu den Lastschienen erstreckenden Trägeranordnung (4), die in den wenigstens zwei Lastschienen mittels jeweils wenigstens eines Führungsschlittens (6) längs verfahrbar gelagert ist, wobei wenigstens einem Führungsschlitten Toleranzausgleichsmittel (8) zugeordnet sind, die eine begrenzte Ausgleichsbewegung zwischen Lastschiene und Führungsschlitten quer zu einer Längsverfahrrichtung ermöglichen.

## Beschreibung

Die Erfindung betrifft eine Ladegutsicherungsvorrichtung für einen Laderaum eines Kraftfahrzeugs mit wenigstens zwei zumindest nahezu parallel zueinander verlaufenden Lastschienen, die an einer gemeinsamen Laderaumbegrenzungsfläche, insbesondere einem Laderaumboden, angeordnet sind, sowie mit einer sich quer zu den Lastschienen erstreckenden Trägeranordnung, die in den wenigstens zwei Lastschienen mittels jeweils wenigstens eines Führungsschlittens längs verfahrbar gelagert ist.

Eine derartige Ladegutsicherungsvorrichtung ist aus der DE 10 2005 031 072 A1 bekannt. Der Laderaum weist mehrere Laderaumbegrenzungsflächen auf, in denen mehrere Lastschienen angeordnet sind. Zwei dieser Lastschienen sind bündig in einen Laderaumboden eingebettet. Diese beiden Lastschienen erstrecken sich parallel zueinander in Fahrzeuglängsrichtung und sind im Bereich von gegenüberliegenden Längsseiten des Laderaumbodens positioniert. In den Lastschienen ist eine Trägeranordnung in Form einer Ladebodenplatte längs des Laderaumes verschiebbar gelagert. Die Ladenbodenplatte wird von insgesamt vier Führungsschlitten getragen, wobei jeweils zwei Führungsschlitten jeder der beiden Lastschienen zugeordnet sind.

Aufgabe der Erfindung ist es, eine Ladegutsicherungsvorrichtung der eingangs genannten Art zu schaffen, die eine verbesserte Verfahrbarkeit der Trägeranordnung im Laderaum ermöglicht.

Diese Aufgabe wird dadurch gelöst, dass wenigstens einem Führungsschlitten oder wenigstens einer Lastschiene Toleranzausgleichsmittel zugeordnet sind, die eine begrenzte Ausgleichsbewegung zwischen Lastschiene und Führungsschlitten quer zu einer Längsverfahrrichtung ermöglichen. Die erfindungsgemäße Lösung geht von der Erkenntnis aus, dass in der Praxis die Ausrichtung der Lastschienen sowie eine entsprechende Positionierung der Führungsschlitten an der Trägeranordnung zu Montageproblemen und demzufolge zu einem Klemmen oder Verkanten der Trägeranordnung in den Lastschienen bei einer entsprechenden Verschiebebewegung führen können. Durch die erfindungsgemäße Lösung wird ein Toleranzausgleich quer zur Längsverfahrrichtung der Trägeranordnung erzielt. Die Erfindung hatte erkannt, dass für ein Verklemmen und ein Verkanten gerade die mangelnde Ausgleichsmöglichkeit in Querrichtung zu der Verfahrbewegung verantwortlich ist. Die erfindungsgemäße Lösung sieht zwei Alternativen vor, die auch kumuliert zueinander eingesetzt werden können. Bei der ersten Alternative sind die Toleranzausgleichsmittel den Führungsschlitten zugeordnet. Dies bedeutet, dass wenigstens ein Führungsschlitten relativ zu der Trägeranordnung mittels wenigstens eines entsprechenden Toleranzausgleichsmittels quer zu der Längsverfahrrichtung begrenzt verlagerbar angeordnet ist. Bei der zweiten Alternative ist wenigstens eine der Lastschienen relativ zur Laderaumbegrenzungsfläche, insbesondere relativ zu dem Laderaumboden, begrenzt quer verlagerbar angeordnet.

Bei einer entsprechenden Längsverfahrbewegung der Trägeranordnung passen sich somit zwangsläufig die Führungsschlitten und die Lastschienen in ihrer Ausrichtung aneinander an, so dass eine kraftarme und über die gesamte Verschiebelänge gleichbleibende manuelle Verschiebebewegung der Trägeranordnung durchgeführt werden kann.

In Ausgestaltung der Erfindung umfassen die Toleranzausgleichsmittel eine schwimmende Lagerung des wenigstens einen Führungsschlittens an der Trägeranordnung oder der wenigstens einen Lastschiene relativ zu der Laderaumbegrenzungsfläche. Die schwimmende Beweglichkeit der Lagerung ist quer zu der Längsverfahrrichtung der Trägeranordnung vorgesehen.

In weiterer Ausgestaltung der Erfindung umfassen die Toleranzausgleichsmittel eine schwimmende Lagerung wenigstens eines in formschlüssigem Eingriff mit der Lastschiene stehenden Roll- oder Gleitelementes des Führungsschlittens relativ zu der Trägeranordnung. Das Roll- oder Gleitelement ist somit mit quer zur Längsverfahrrichtung vorgesehenem Spiel an der Trägeranordnung gelagert. Dabei kann die begrenzte Relativbeweglichkeit des Roll- oder Gleitelementes relativ zu übrigen Teilen des Führungsschlittens vorgesehen sein. Alternativ ist der gesamte Führungsschlitten einschließlich des wenigstens einen, entsprechenden Roll- oder Gleitelementes an der Trägeranordnung schwimmend gelagert.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Ausführungsform einer erfindungsgemäßen Ladegutsicherungsvorrichtung in ihrem in einen Laderaum eines Kombi-Personenkraftwagens eingebautem Funktionszustand,
- Fig. 2: in vergrößerter, perspektivischer Darstellung eine Unterseite einer Laderaumbodenplatte der Ladegutsicherungsvorrichtung nach Fig. 1 und
- Fig. 3: in vergrößerter, perspektivischer Darstellung den Führungsschlitten der Ladebodenplatte nach Fig. 2.

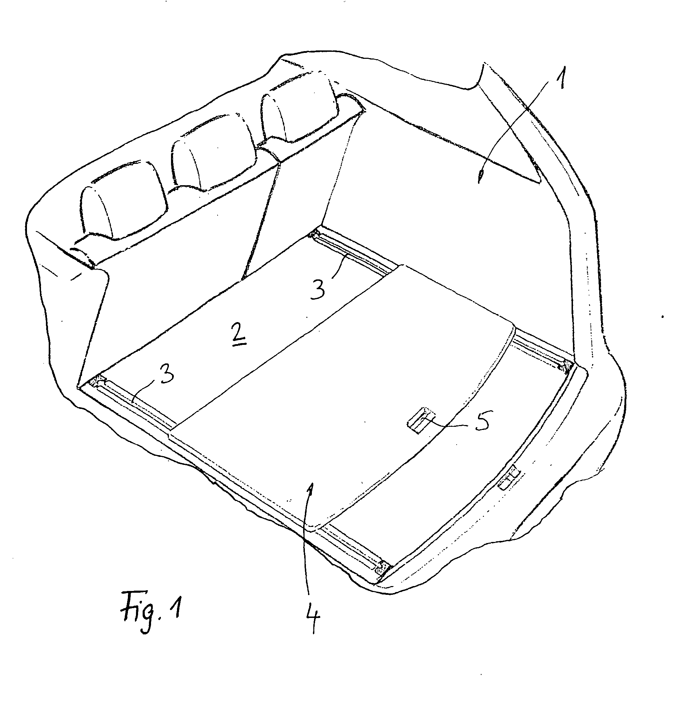

Ein Laderaum 1 nach Fig. 1 ist Teil eines Fahrzeuginnenraumes eines Kraftfahrzeugs in Form eines Kombi-Personenkraftwagens, eines Vans oder eines Geländewagens, bei denen der Laderaum 1 offen in einen Fahrgastraum übergeht. Die erfindungsgemäße Lösung eignet sich in gleicher Weise für Kraftfahrzeuge mit geschlossenen Lade- oder Kofferräumen, bei denen Fahrgastraum und Laderaum vollständig getrennt voneinander angeordnet sind. Der Laderaum 1 ist in einem Heckbereich des Kraftfahrzeugs vorgesehen und durch eine Hecköffnung zugänglich, die durch eine nicht dargestellte Heckklappe verschließbar ist. Der Laderaum 1 wird zu seinem gegenüberliegenden Seiten durch Seitenwandungen begrenzt. Nach vorne wird der Laderaum 1 durch eine Rückenlehnenanordnung einer Fondsitzbank begrenzt. Nach unten dient zur Begrenzung des Laderaumes ein Laderaumboden 2, der beim dargestellten Ausführungsbeispiel durchgängig eben ausgeführt ist.

In dem Laderaumboden 2 sind zwei Lastschienen 3 integriert, die bündig in den Laderaumboden 2 eingebettet sind. Die beiden Lastschienen 3 verlaufen in Fahrzeuglängsrichtung und erstrecken sich über nahezu die gesamte Länge des Laderaumes 1. Die beiden Lastschienen 3 sind im Bereich gegenüberliegender Längsseiten des Laderaumbodens 2 angeordnet. Beide Lastschienen 3 sind fahrzeugfest in dem Laderaumboden 2 angeordnet. Beide Lastschienen 3 sind fest mit einer Karosserietragstruktur des Kraftfahrzeugs verbunden, um eine crashsichere Verankerung zu ermöglichen.

Die Lastschienen 3 sind als Hohlprofile mit insbesondere C-förmigem Querschnitt ausgeführt, wobei sich eine nach oben offene Nut ergibt, die in der Ebene der Oberfläche des Laderaumbodens 2 angeordnet ist.

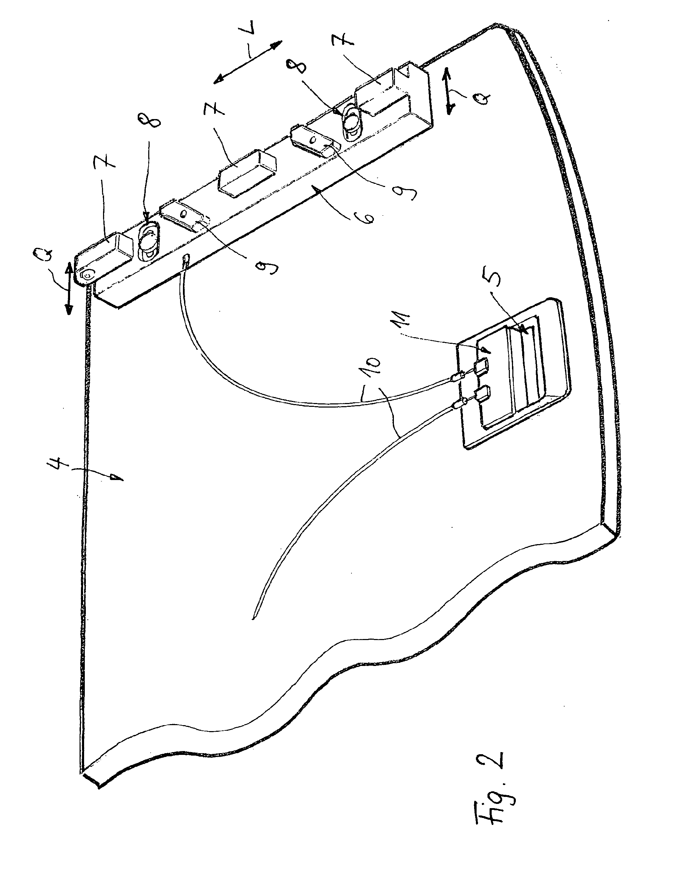

In den Lastschienen 3 ist eine als Trägeranordnung dienende Ladebodenplatte 4 längsverschiebbar gelagert. Die Ladebodenplatte 4 ist etwa parallel knapp oberhalb der Ebene des Laderaumbodens 2 verschiebbar angeordnet. Die Ladebodenplatte 4 weist in etwa die Breite des Laderaumbodens 2, jedoch lediglich etwa die Hälfte der Länge des Laderaumbodens auf. Die Ladebodenplatte 4 ist durch eine Bedienperson manuell längs des Laderaumbodens 2 verschiebbar. Zum Ergreifen und Verschieben der Ladebodenplatte 4 ist eine Griffanordnung 5 vorgesehen. Diese kann gemäß Fig. 2 mit einer Bremsenbetätigung 10, 11 gekoppelt sein. Hierzu ist das Griffelement 5 längsverschiebbar gelagert gemeinsam mit einer Betätigungsplatte 11, an der zwei Bowdenzüge 10 befestigt sind. Die Bowdenzüge 10 betätigen nicht näher dargestellte Bremselemente, die der Ladebodenplatte 4 zugeordnet sind, um eine Blockierung der Ladebodenplatte 4 relativ zu den Lastschienen 3 in unterschiedlichen Positionen längs des Laderaumbodens 2 zu ermöglichen.

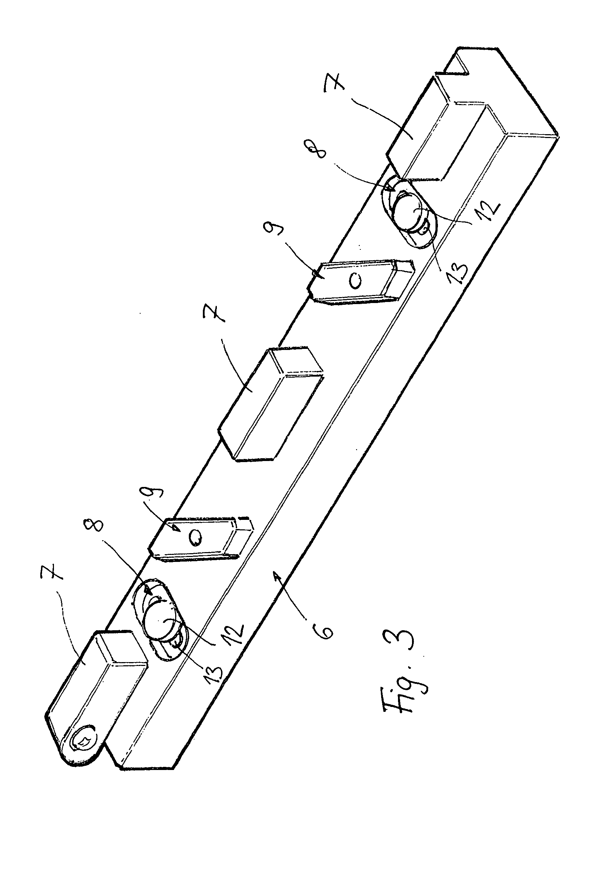

Die Ladebodenplatte 4 ist mit Hilfe von zwei Führungsschlitten 6 in den Lastschienen 3 längs verschiebbar gehalten. Die beiden Führungsschlitten 6 sind an der Unterseite der Ladebodenplatte 4 angeordnet. Die beiden Führungsschlitten 6 sind identisch zueinander ausgeführt, so dass der Einfachheit halber in den Fig. 2 und 3 lediglich der in Verfahrrichtung nach vorne linke Führungsschlitten 6 dargestellt ist. Der Führungsschlitten 6 weist einen Schlittenblock auf, der quaderartig gestaltet ist und in seiner Breite etwa der Breite der zugeordneten Lastschiene 3 entspricht. Er streckt sich über mehr als die Hälfte der Länge der Ladebodenplatte 4 und ist seitlich an der Unterseite der Ladebodenplatte 4 angeordnet und in Längsrichtung der Ladebodenplatte 4 - auf die montierte Stellung der Ladebodenplatte 4 bezogen - an dieser gelagert. Die Lagerung des Schlittenblockes des Führungsschlittens 6 an der Ladebodenplatte 4 ist in Querrichtung schwimmend. Hierzu weist der Führungsschlitten 6 zwei in Abstand zueinander angeordnete Langlöcher 13 auf, die den Schlittenblock durchdringen und die quer zur Längsrichtung des Schlittenblockes ausgerichtet sind. Zu seiner von der Ladebodenplatte 4 abgewandten Seite hin ist den Langlöchern 13 jeweils noch eine Langlochnut 8 mit gegenüber den Langlöchern 13 vergrößerter Breite und vergrößerter Länge zugeordnet. Beide Langlöcher 13 werden von jeweils einem Lagerbolzen 12 durchdrungen, der an der Unterseite der Ladebodenplatte 4 befestigt ist. Die Befestigung erfolgt insbesondere durch Verschraubung mit der Ladebodenplatte 4. Jeder Lagerbolzen 12 weist einen abgeflachten Kopf auf, der in die Langlochnut 8 eingebettet ist und bündig mit einer Oberfläche des Schlittenblockes abschließt. Die Länge des Lagerbolzens 12 in seiner befestigten Endstellung ist so groß gewählt, dass der Kopf des jeweiligen Lagerbolzens 12 nicht auf eine entsprechende Gegenfläche der Langlochnut 8 gepresst ist, sondern vielmehr mit einer geringen Spiel- oder einer Übergangspassung zu der Langlochnut 8 des Bolzens gehalten ist. Hierdurch kann der Schlittenblock und damit auch der Führungsschlitten 6 in Querrichtung Ausgleichsbewegungen durchführen, die durch die Länge des jeweiligen Langloches 13 begrenzt sind.

Der Führungsschlitten 6 weist insgesamt drei Führungssteine 7 auf, die quaderförmige Körper darstellen und beim dargestellten Ausführungsbeispiel einstückig von dem Schlittenblock aus nach unten abragen. Die als Führungsblöcke dienenden Führungssteine 7 sind über die Länge des Führungsschlittens 6 - in Längsrichtung des Führungsschlittens 6 miteinander fluchtend - gleichmäßig zueinander beabstandet angeordnet. Die Breite der Führungssteine 7 ist etwas geringer als die Breite der Führungsnut der zugeordneten Lastschiene 3, so dass die Führungssteine 7 von oben her in die Führungsnut der Lastschiene 3 einsetzbar sind und in der Funktionsstellung der Ladebodenplatte 4 in die Führungsnut der entsprechenden Lastschiene 3 eingreifen. Ein formschlüssiger Rückhalt gegen ein Herausnehmen nach oben kann vorgesehen sein für offene Laderäume, muss aber für geschlossene und von einem Fahrgastraum getrennte Laderäume nicht vorgesehen sein. Der Schlittenblock des Führungsschlittens 6 ist zudem mit zwei Gleitelementen versehen, die aus einem Material mit einem geringen Reibungskoeffizienten bestehen. Die Gleitelemente 9 liegen in der Funktionsposition der Ladebodenplatte 4 auf der Oberfläche der entsprechenden Lastschiene 3 auf. Falls nun nach dem Einsetzen der Ladebodenplatte 4 mittels ihrer beiden Führungsschlitten 6 in die Lastschienen 3 die beiden Lastschienen 3 nicht exakt parallel zueinander ausgerichtet sind, oder falls die beiden Führungsschlitten 6 nicht exakt parallel zueinander und in Flucht mit den entsprechenden Lastschienen 3 ausgerichtet sind, wirkt die Querverlagerbarkeit beider Führungsschlitten 6 mittels der zuvor beschriebenen Toleranzausgleichsmittel 8, 12, 13, so dass die Führungsschlitten 6 sich beim Einsetzen der Führungssteine 7 in die Lastschienen 3 sowie bei einem anschließenden manuellen Verschieben der Ladebodenplatte 4 zwangsläufig in die entsprechend parallele Lage ausrichten. Die beschriebene schwimmende Lagerung der beiden Führungsschlitten 6 ermöglicht die gewünschte Ausrichtung und Selbstjustierung.

## Patentansprüche

1. Ladegutsicherungsvorrichtung für einen Laderaum eines Kraftfahrzeugs mit wenigstens zwei zumindest nahezu parallel zueinander verlaufenden Lastschienen (3), die an einer gemeinsamen Laderaumbegrenzungsfläche, insbesondere einem Laderaumboden (2), angeordnet sind, sowie mit einer sich quer zu den Lastschienen (3) erstreckenden Trägeranordnung (4), die in den wenigstens zwei Lastschienen (3) mittels jeweils wenigstens eines Führungsschlittens (6) längs verfahrbar gelagert ist, **dadurch gekennzeichnet, dass** wenigstens einem Führungsschlitten (6) oder wenigstens einer Lastschiene Toleranzausgleichsmittel (8, 12, 13) zugeordnet sind, die eine begrenzte Ausgleichsbewegung zwischen Lastschiene (3) und Führungsschlitten (6) quer zu einer Längsverfahrrichtung ermöglichen.

2. Ladegutsicherungsvorrichtung nach Anspruch 1, **dadurch gekennzeichnet, dass** die Toleranzausgleichsmittel eine schwimmende Lagerung (8, 12, 13) des wenigstens einen Führungsschlittens (6) an der Trägeranordnung (4) oder der wenigstens einen Lastschiene relativ zu der Laderaumbegrenzungsfläche umfassen.

3. Ladegutsicherungsvorrichtung nach Anspruch 1, **dadurch gekennzeichnet, dass** die Toleranzausgleichsmittel eine schwimmende Lagerung wenigstens eines in formschlüssigem Eingriff mit der Lastschiene stehenden Roll- oder Gleitelementes des Führungsschlittens relativ zu der Trägeranordnung umfassen.
